# EUROPEAN PATENT APPLICATION

(11) **EP 4 071 653 A1**
(43) Date of publication of application: **12.10.2022**
(21) Application number: 21020187.7
(22) Date of filing: 08.04.2021
(51) Int. Cl.: G06F 30/17, G06F 30/23, B33Y 10/00, G06F 111/06, G06F 113/10, G06F 111/10, A63G 1/00, A63G 7/00, A63G 21/00, A63G 31/00

(54) **A CONSTRAINED METHOD FOR MULTI-PARAMETRIC OPTIMIZATION DESIGN AND RELATED PRODUCTION PROCESS FOR THE 3D ADDITIVE SYNTHESIS OF MECHANICAL AND STRUCTURAL COMPONENTS OF A ROLLER-COASTER AND AMUSEMENT RIDES/DEVICES ACCORDING TO EN13814**

(71) Applicant: Bernardini, Simone, 37052 Casaleone (VR) (IT)
(72) Inventor: Bernardini, Simone, 37052 Casaleone (VR) (IT)

(57) **Abstract**

Constrained designing method with multi-parametric optimization and a cross-connected production process for the robotic additive synthesis of the mechanical and structural components of a rollercoaster, compliant with the EN13814 standard.

Whereas said rollercoaster has a 3D shape, forming a closed path, with portions at various inclinations and rotations and a set of curves or spirals, where said roller coaster is subject to a variable number of degrees of freedom.

The cross-connected 3D printing production process engenders constraints to the designing method, as the latter must take into account the physical limitations of the printing device, avoiding generating not printable models.

**FIELD OF THE INVENTION**

The present invention refers to a constrained method with multi-parametric optimization and the related production process for the additive robotic synthesis of mechanical and structural components of a roller coaster compliant with the EN13814 standard.

## Description

### BACKGROUND OF THE INVENTION

In the sector of roller coaster, regulated by the EN13814 standard, the design of the structures, including a rail, which supports one or more seats and which carries one or more passengers, having a 3D shape to provide passengers with sensations essentially due to high speed and accelerations, implies the development of a physical product, through a creative designing phase in which the tasks that must be carried out are well known but the constraints of the associated printing equipment are not yet outlined.

In this field, any finite element design must also take into account the interfaces with the other parts, with a more or less realistic estimate of the loads affecting the system, and the ranges of mechanical performance values such as, for example, stiffness, strength, weight of the product, often based also on the experience of previous realizations.

Among the multiple constraints regulating the design of roller coasters, for example the size of the printing head, there are those about the constructive process technique: electro-welded carpentry, machining by removal, casting, injection, or 3D moulding.

The design process also includes the specifications of the material, designed to meet the constraints on intrinsic mechanical characteristics and the attribution of authorship

An innovative technique, already known, for the initial definition of the volumetric characteristics of the building is the topological analysis of the volumes of a mechanical part.

This is carried out by computer simulation where it is possible to bring together the essential characteristics of the project in terms of project volumes, production technology, loads, operating conditions and objectives to be achieved

The cyclic method which allows to synthesize an innovative shape for the product, identifying those areas of the volume necessary to achieve the target, and removing all the others, with the innovative aim to search for the lightest solution.

One of the advantages of the technique of the topological analysis of the volumes, applied to the amusement ride sector, compliant with the EN13814 standard, is that, once the kinematic course of the rail path is known, it allows to improve the shape of the moving parts that must be rigid but light at the same time.

The next step of the method is precisely the design of the curves of the rail in the space that supports the attachments of the seats to determine the stresses and tensions in the various points of the track.

These indications are then transferred to a FEM process, which makes an a posteriori analysis to verify compliance with the safety and resistance of the product to the various constraint reactions.

To set the topological optimization, the next step is to create the finite element model (FEM) of the design space, defining the mesh, loads and constraints, as is traditionally done for a stress-analysis. Unlike the canonical structural analyses, it is possible to define two distinct mesh areas for the Active elements (i.e. those that will contribute to the optimization) and the passive elements (those that will not be considered by the multi-parametric optimizer).

The volumetric topological optimization is an ideal tool in the conceptual first phase of the roller coaster design process that allows to quickly get at proposals of fairly coarse spatial forms, than later require a refinement of the construction details, that in any case allows to drastically reduce the number of many design iterations and, at the same time, provides valuable information to the designer on how to improve the design of the final product, taking into account the constraints of the printing system.

More specifically, topology optimization starts from a continuous model of the design space. Iteratively, the optimization process removes, or re-distributes material not used efficiently. The cyclic optimization process, removing the material up to the predefined volumetric fraction of the design space, which is the stop criterion of the procedure.

The result of the method is a so-called "trim" model of the roller coaster to which the elements that have a relative density value lower than a threshold decided by the operator are removed.

Unlike manual project, where iterations are guided by the experience and intuition of the designer, the present cyclic optimization process can sometimes lead to very innovative designs.

Most of the methods, in the state of art, are not specialized for the sector of rides and in particular they do not include in the topological design process a final control step given by the stratigraphic analysis of all residual stresses and an explicit check of the feasibility production, constrained by the additive manufacturing technique using 3D printing.

The advantages of additive manufacturing lie in the possibility of being able to distribute the material in a practically impossible way with traditional production techniques such as casting or chip removal, obtaining components with an extremely optimized shape from a structural point of view. On the other hand, this wide freedom to distribute the material requires a new typed approach to design as traditional methods could limit the advantages of additive manufacturing, due to the difficulty of constructing the details.

The topological optimization of the volumes is also successful in the context of additive manufacturing as it allows synthesizing the best shape for the product, automatically identifying the areas in which it is necessary to foresee the material, from those that could be excavated or emptied as the contribution of that material is marginal for achieving the desired performance. All without having to respect the constraints of traditional production technologies.

As regards the manufacturing process of the product, designed taking into account the metal 3D printing technique; the additive process has been used as a design and prototyping tool for decades, but the focus of metal additive manufacturing is now shifting towards the direct manufacturing of components, such as medical implants, aircraft engine parts.

3D printing systems can be classified: i) according to the source of energy or the way the material is joined, for example using a binder, a laser, a heated nozzle, etc, ii) by the group of materials being processed, such as plastic, metal or ceramic, iii) by the state of the raw material, with the most common being solid (powder, wire or sheet) or liquid, is also used to define the process.

3D printing on metal with an additive process allows you to create and produce metal parts with complicated geometries that cannot be achieved with traditional subtractive or casting technologies. In fact, the sintering of metals is the most innovative technology on the market, a laser melts the metal powders and the result is the model directly ready to be used as the definitive element.

Producing metal parts with a 3D printer greatly reduces the cost of producing parts, as these machines require little raw material to create an object, if subject to topological optimization. Titanium, steel or nickel-chromium are the metals with which, to date, it is possible to 3D print.

In fact, with traditional technology, producing metal objects can be a costly process. Many heavy parts are produced and excess material is used.

For example, when aircraft manufacturers manufacture metal parts, up to 90% of the material is cut. 3D printed metal parts consume less energy and reduce waste. Thanks to this, finished 3D printed products can be up to 60% lighter.

The aviation industry alone is saving billions of dollars thanks to this weight reduction, mainly due to fuel. In fact, a precise and powerful laser capable of melting the metal powder draws the model loaded from CAD files layer by layer until the desired object is obtained. The products obtained in this way have mechanical properties comparable to products obtained with a classic subtractive process with a high degree of precision. Direct metal 3D printing uses a high-precision laser and is directed at metal powder particles to build selectively thin and successive horizontal metal layers.

The metal powder particles melt so that the new material sticks properly to the previous layer, without glue or binder liquid.

The parts can be made from a variety of different metals and are completely dense and fully usable. Another advantage of metal 3D printing is that the manufacturing process is directly compatible with Industry 4.0.

The 3D printing of metal components is used in various sectors at the moment, in the aerospace sector to produce functional parts, in the medical sector for the creation of prostheses and orthodontic parts but it is not applied to the roller coaster sector precisely because of the latter's characteristic where freedom and creativity in the initial project make each product unique.

Additive manufacturing, or the sequential assembly or construction of a part through the combination of material addition and applied energy, takes many forms and currently exists in many specific implementations and realizations. Additive manufacturing can be done using any of several processes that involve forming a three-dimensional part of virtually any shape. The various processes have in common the sintering, polymerization or melting of liquid, powder or granular raw material, layer by layer using ultraviolet light, high power laser or electron beam, respectively. Unfortunately, the processes established for determining a quality of a resulting part produced in this way are limited. Conventional quality assurance tests generally involve destruction of the part. While destructive tests are an accepted way of validating the quality of a part, as they allow for a careful examination of the various internal characteristics of the part, such tests cannot, for obvious reasons, be applied to a production part. Consequently, ways of non-destructive verification of the quality of a part produced by additive manufacturing are highly desired.

### STATE OF THE ART

Document US5497451 A describes a computerized process for defining finite elements in a surface or volume to predict a physical feature of the surface or volume. For the surface, the process includes a first step of entering the surface boundary point coordinates of a geometric model of the surface into a computer system, the computer system including an image display screen showing the geometric model.

The process also includes the preparation of the boundary edges of the surface by generating geometrically smooth Bezier curves between the boundary points and the conversion of the Bezier curves into cubic interpolation polynomials and the definition of equidistant points on each cubic interpolation polynomial and decomposition of the surface with dividing curves, if the surface is not already 3, 4 or 5 sided, in primitives with 3, 4 and 5 sides. Next, the largest acceptable element size and the number of elements arranged along each edge of each primitive are determined. The next steps are adjusting one of the divider curves to match the vertices of an even closest element and mapping into 3- and 5-sided clusters and then preparing the remaining 4-sided primitives for decomposition into 4-sided elements and the mapping into elements and patches of elements. Next, the method includes the steps to optimize the elements in the mesh and write the resulting mesh to an archive file.

In document, US7610859B1, an invention is disclosed which relates to an improved roller coaster system having one or more tracks, which may exist in different orientations on a supporting spine or equivalent supporting structure. Passengers can be rotated regardless of the orientation of the runways an essentially unlimited amount of times in both directions on predetermined axes that use inertia as the driving force. If multiple tracks are used, each can be separated from the others in parts of the circuit to provide unique track elements for each group of riders. In addition, each track can have its own orientation and position relative to the support system swapped with other tracks in the system.

In document KR101173521B1 an invention is presented that refers to the kit for the development of creativity in the design of roller coasters, in particular, the kit helps to demonstrate how it is possible to use imagination and creativity to design and build a sliding track of the roller coaster structure. Furthermore, thanks to the kit, it is possible to easily access the structure to make changes and work in groups.

### SUMMARY OF THE INVENTION

The invention consists of a typed design method with multi-parametric optimization and a connected production process for the robotic additive synthesis of the mechanical and structural components of a roller coaster, compatible with the EN13814 standard relating to playgrounds and amusement parks, having a shape that varies in three spatial dimensions, which form a closed path, with portions at various inclinations and rotations and a set of curves, including spirals, and where said roller coaster is subject to a variable number of degrees of freedom.

Said typed design method, or specialized for the ambit of rides compatible with the EN13814 standard, includes the phases of: pre-feasibility for the choice of the construction material, kinematic analysis and evaluation of extrapolation of the loads to be applied to the structures, preliminary FEM analysis structures, creation of the path curves (in the case of coasters), topological analysis of the volumes, curves of the path, dedicated FEM analysis for topological analysis of the constraint reactions, stratigraphic analysis for residual stress determination and final FEM analysis for the validation of the artifact, with consequent production of a technical file. These phases are applied cyclicly for the final optimization of the product, until a stop criterion is met. The connected production process for the additive synthesis of mechanical/structural components uses the robotic 3D printing technique, directly processing the output data of this method. The present invention makes it possible to create any type of path for the moving parts of the roller coaster, producing the mechanical/structural details which guarantee their dynamic functionality, with the desired degree of safety and the consequent feasibility of some components with three-dimensional additive molding techniques.

The present invention consists of a typed design method and a connected production process for the robotic additive synthesis of the particular mechanical / structural components of a roller coaster based on several seats that move along rails with a path with variable shape in the three dimensions, where these rails form a closed circuit, with portions at various inclinations and rotations and a set of curves, including spirals, and where the seat is constrained by a coupling device with several degrees of freedom.

The novelty of the method consists in the fact that the boundary conditions for the FEM analysis of the coupling device also take into account the three-dimensional geometric shape of the closed circuit of said roller coaster (roller coaster), and therefore the shape of the circuit path determines the maximum centrifugal acceleration and therefore the mechanical stresses to which the seat coupling device is subject, taking into account that the invention relates only to the segment of the roller coasters.

Therefore, the verification of the FEM analysis can include the geometric modification of the layout of said closed circuit and of the material with which said circuit is made, and is conducted on the basis of simulations built on a wide range of loads and stresses, of the vectors of tangential accelerations in every point of the trajectory, of the components of the centripetal accelerations, of the peripheral speeds in order to allow oscillations of the seat, such that the passengers, in total safety, can perceive the maximum stresses.

The method is inventive because the topological optimization, connected to the FEM analysis, can also include the modification of the closed circuit layout. By way of example but not limiting, if the kinematic analysis gives an acceleration value g greater than the tolerance of the invention, then instead of strengthening the invention, it is possible to intervene by modifying the trajectory of the circuit in such a way as to reduce the maximum acceleration value.

The topological analysis of the volumes is aimed at maximizing the sensations perceived by passengers in the trolley, for this reason there could be maps of very variable loads depending on the number of passengers, on the operating conditions, for example demonstrative and not limiting, the different areas of tracing determine different load values for the seat coupling device.

During the optimization of the structure at each cycle, the optimization algorithm performs a sensitivity analysis to evaluate the impact that the variation in the density of the material has on the objective function in order to maximize the perception of movement by the passengers. Usually the mechanical goal is to maximize the overall rigidity of a structure in compliance with the standard, for a given amount of mass removed. In the present invention, the optimization of the structure and of the product through the active parts of the mesh also takes into account the final sensation perceived by the passengers on the roller coaster.

Since the artefact is printed in 3D mode, with layers also composed of different metal powders, and therefore the stratigraphic technique used must be able to carry out a numerical analysis by correctly weighing the properties of the different layers also composed of different metal powders, and must be able to calculate the overall response of the system in terms of different physical-mechanical quantities and in this lies the innovativeness of the proposed stratigraphic simulation technique

The characteristics of the most suitable metal powders for the purpose may also be entirely new with respect to the known art. Therefore, the inventiveness of said solution lies in the possibility of using different layers of powder, with two particular measures, the first layer deposited in the scanning chamber must be the same as the metal of the printer support, the second refers to the fact that the layer can have different characteristics from the previous one only if the stratigraphic simulation results in a benefit in terms of tensions, to mitigate the deformation and distortion that can occur due to high processing temperatures. Among the input parameters in the simulation of the behaviour of the different powder layers, the fusion compatibility of the two metal layers must be verified, the next with the previous one, ensuring this property without the need for binders.

The inventive aspect also concerns the manufacturing process of the product, i.e. that the additive layer, during the 3D printing process, can be of a different material from the previous one and so on, thanks to the timely simulation of the different materials intended to be used.

In particular, the inventive step is located in the powder melting system, characterized by a double laser system, in which it can be established by the operator how many layers of powder that specific laser will have to melt, also taking into account the type of metal powder used to that layer, you can choose, by way of non-limiting example, to set that each of the two lasers, of the double laser system, melts no more than one layer of metal powder, i.e. the first laser runs along the first layer of metal powder to once, and once stopped, the second laser starts which, as soon as the new layer of metal powder has been spread, even if different in materials from the previous one, moves by melting this layer in the opposite direction, in this way it is possible to keep the temperature constant and maximizing almost doubling the duration of the two lasers and halving the paths with which the additive method is conducted.

### BRIEF DESCRIPTION OF THE DRAWINGS

The invention is described below also with reference to the attached figures, in which are represented:

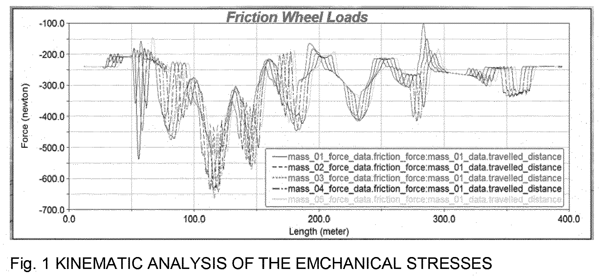

- FIGURA 1: Kinematic analysis of the mechanical stresses

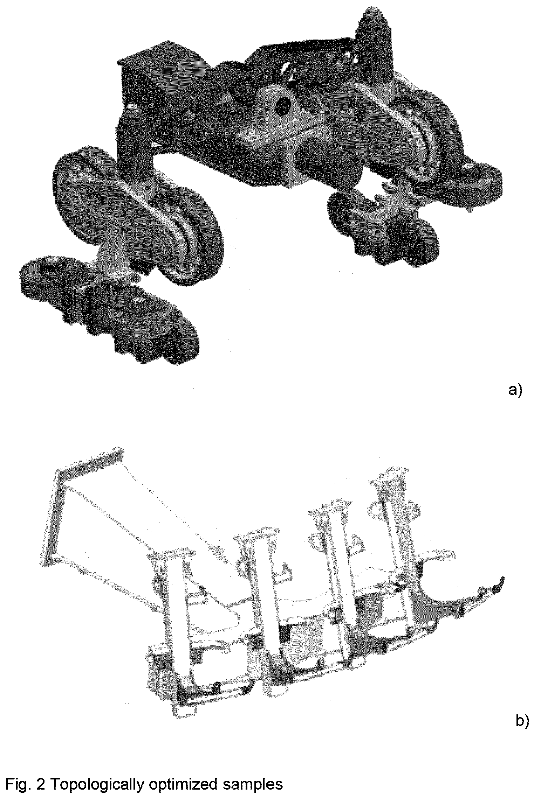

- FIGURA 2: Topologically optimized samples

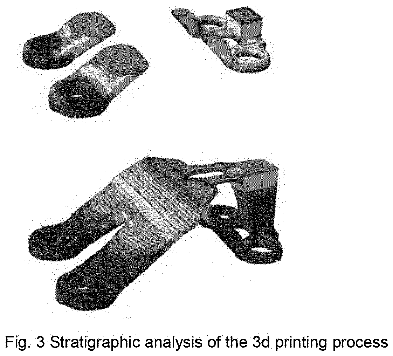

- FIGURA 3: Stratigraphic analysis for the 3D printing

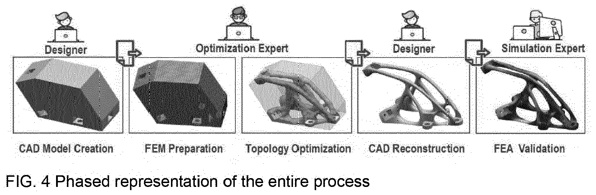

- FIGURA 4: Phased representation of the entire process

### DETAILED DESCRIPTION

The present invention consists of a typed design method and a connected production process for the robotic additive synthesis of the particular mechanical / structural components of a roller coaster based on a seat that moves along rails with variable shape in the three dimensions, which form a circuit closed, with portions at various inclinations and rotations and a set of curves, including spirals, and where the seat is constrained by a coupling device with several degrees of freedom. The novelty of the method consists in the fact that the boundary conditions for the FEM analysis also depend on the three-dimensional geometric shape of the closed circuit of said roller coaster, by way of a non-limiting example, the circuit layout determines the maximum centrifugal acceleration and hence the mechanical stresses to which the invention is subject, taking into account that it concerns only the segment of the rides (roller coaster).

The geometric modification of said closed circuit and of the material takes place on the basis of simulations of a wide range of loads and stresses, of the vectors of tangential accelerations at each point of the trajectory, of the components of centripetal accelerations, of radii and peripheral velocities in order to allow oscillations of the trolley such that the passengers, in total safety, can perceive the maximum stresses.

This typed design method, or specialized for the ambit of rides compatible with the EN13814 standard, includes the phases of: pre-feasibility for the choice of material and compliance with the intrinsic mechanical characteristics, kinematic analysis and evaluation of extrapolation of the loads to be applied to the structures, preliminary FEM analysis of the structures, creation of the path curves (in the case of coasters), topological analysis of the volumes, path curves, dedicated FEM analysis for topological analysis of the constraint reactions, stratigraphic analysis for residual stress determination and final FEM analysis for the validation of the artifact.

It should be noted that the general notation to the EN13814 standard is explicitly desired since it necessarily includes the three standards in which it is declined and, the present invention, takes into consideration all three standards in the optimization phase.

These phases are applied cyclically for the final optimization of the product, until a stop criterion is met.

The connected production process for the additive synthesis of mechanical/structural components uses robotic 3D printing, directly processing the output data of the typed method to control a 3D printing plant.

The present invention makes it possible to create any type of path in the space of the roller coasters compatible with the EN13814 standard, producing the mechanical/structural details that guarantee its dynamic functionality, with the desired degree of safety and the consequent feasibility with three-dimensional additive molding techniques some components.

The typed method includes the following steps:

### Phase 1: Pre-feasibility analysis

Choice of the material with which to make the detail and verification through a standardized test of compliance with the intrinsic mechanical characteristics, with attribution of paternity.

The most used material is aluminium, in the present invention it is not said that the material is aluminium, the pre-feasibility analysis must define the mechanical (but also chemical and physical) properties that the product must have based on the closed loop geometry.

### Phase 2: Topological analysis of the volumes

Starting from the forces that must be applied to the model to ensure particular accelerations and speeds in the various points of the circuit, and the general structure (CAD) of the roller coaster and/or the course of the rail gives volume to the same by establishing its real dimensions. This phase is carried out through computer simulation in which it is possible to bring together the essential characteristics of the project in terms of project volume, production technology, loads, operating conditions and objectives to be achieved, which allows to synthesize an innovative form for the product, identifying those areas of the volume necessary to reach the target, and removing all the others.

The technique of topological analysis of the volumes, applied to the roller coaster sector, is that, once the kinematic trend of the rail path is known, it allows to improve the shape of the moving parts which must be rigid and light at the same time. It should be noted that with this method no initial design is necessary only the idea of the volume and the constraint points.

### Phase 3: Analysis of curves or kinematics

The second step of the method is precisely the design of the curves or kinematics in the space of the rail or of a moving roller coaster that supports the attachment or attachments of the car/gondola to determine the stresses and tensions in the various points of the track or movement imposed simulated.

The ultimate aim of this force analysis is the maximization of the sensations perceived by the passengers. In particular, the differentiable areas are not only the track area, the deviation/union area, the loading/unloading area and the storage area but also all the possible areas of said product and of said structure with the possibility of creating mixed areas deriving from the wide variety of degrees of freedom.

Said cars/gondolas must be designed for the transport and maximum enjoyment of passengers, therefore also said pre-processing of curves or three-dimensional kinematics of the structure and of the artifact must be optimized to maximize the sensations perceived by passengers.

### Phase 4: Finite element structural analysis, FEM

The information necessary to define a structural problem to be solved with finite elements, produced by phases I and II, are:
- the geometric support model for the structural elements (points, curves, surfaces,...), collectively referred to as the term mesh;
- the type of structural elements to be associated with the individual geometric entities for the creation of the structural model (members, beams,
   panels, ...);
- the geometric and mechanical characteristics of the structural elements (thicknesses, resistant areas, resistance modules, shear factors, ...);
- the characteristics of the material used for the construction (modulus of elasticity, specific mass,...);
- the loads and constraints of the structural model (forces, pressures,...).

### Phase 5: Topological optimization

In this phase, two distinct mesh areas are defined: i) for the active elements (i.e. those that will contribute to the topological optimization) and ii) for the passive elements (those that will not be considered by the optimizer).

For the former, the parts whose density is less than a threshold value are removed, to be cleaned, removing bevels and irregularities.

Said topological optimization can also include the modification of the layout of the closed circuit. By way of example but not limiting, if the kinematic analysis gives an acceleration value g greater than the tolerance of the invention, then instead of strengthening the invention, it is possible to intervene by modifying the trajectory of the circuit in such a way as to reduce the maximum acceleration value.

The topological analysis of the volumes is aimed at maximizing the sensations perceived by passengers in the trolley, for this reason there could be maps of very variable loads depending on the number of passengers, on the operating conditions, for example demonstrative and not limiting, the different zones determine many different load cases for the truck frame therefore a wide range of "stress level" even greater than 65 MPa.

During the optimization of the structure in each iteration, the optimization algorithm performs a sensitivity analysis to evaluate the impact that the variation of the density of the material has on the objective function to maximize the perception of movement by the passengers who are on the roller coaster. Usually the optimization goal is to maximize the overall stiffness of a structure or to minimize its compliance under a given amount of mass removal. In the present invention, the optimization of the structure and the product through the active parts of the mesh is also a function of the maximum final sensation perceived by the passengers on the roller coaster.

### Phase 6: Stratigraphic analysis

At the end of the topological optimization phase, we proceed with a final stratigraphic analysis phase to determine the residual reactions on the various points of the artefact and the determination of the optimal printing technique.

The stratigraphic simulation, being the 3D printed artefact with layers also composed of different metal powders, the stratigraphic technique used must be able to carry out an analysis by correctly weighing the properties of the different layers also composed of different metal powders, and must be able to calculate/simulate the overall response of the system in terms of different physical-mechanical quantities.

All the cyclic analyses are aimed at obtaining, with the same safety, the minimization of the material, the multi-typology of track, train, propulsion, height for said track.

The solutions of the most suitable metal powders for the purpose may also be completely new compared to the existing ones, such as mixtures not yet available on the market. Therefore, the inventiveness of said solution lies in the possibility of using different layers of powder, with two particular measures, the first layer deposited in the scanning chamber must be the same as the metal of the printer support, the second refers to the fact that the layer can have different characteristics from the previous one only if the stratigraphic simulation results in a benefit in terms of tensions, to mitigate the deformation and distortion that can occur due to high processing temperatures. Among the input parameters in the simulation of the behaviour of the different layers of powder there must also be the item relating to the compatibility in terms of fusion of the two metal layers, the next with the previous one, ensuring this property without the need for binders.

The additive layer can be different from the previous one and so on, thanks to the precise simulation of the different materials to be used.

Inventive step: the powder melting system is characterized by a double laser system, in which it can be established by the operator how many layers of powder that specific laser will have to melt, also depending on the type of metal powder used for that layer for example, choose not limitedly to set that each of the two lasers melts no more than one layer of metal powder, i.e. the first laser flows from point A to point B along the first layer of metal powder, it stops giving way to the second laser that, as soon as the new layer of metal powder has been spread, even if different by nature from the previous one, it starts by melting this layer from point B to point A, in this way it is possible to keep the temperature constant and maximize almost doubling the duration of the two lasers and halve the paths.

### Phase 7: Certification and approval of the part

When the prototype of the detail is finished, a final test is carried out according to a protocol of controls determined also based on the severity of the use of the element itself in compliance with current legislation and the release of a technical file

This typed method allows:
- Reduction of the weight of the part, which, for the world of roller coasters, means in any case reducing all the dimensions of the roller coaster and above all also the possibility of improving all the drives (lower cost.
- Production and realization times reduced.
- Well-defined delivery times once the order has been defined.
- Final production of components, rather than simple prototyping.

The method may include the preparation of a file (procedure book) for the acceptance of the product by the final company.

## Claims

1. Method, and cross-linked manufacturing process, to design in a structured way, i.e. regulated by cyclic phases, components of roller coasters and all the amusement rides/devices, compliant with the EN13814 standard, including standards 1, 2 and 3, which unfolds in a 3D closed circuit of any shape or size, after establishing the boundary conditions; relating to the three-dimensional geometric shape of said closed circuit, consisting of the following steps, repeated cyclically, until the boundary conditions are satisfied:
a. Perform pre-feasibility analysis, with creation of the material, verification of the intrinsic mechanical characteristics and attribution of structural paternity of the components
b. Analyse the forces that must be applied to the model to ensure particular, in the maximum sense, accelerations and speeds in the various points of the circuit or kinematic movement, set by the operator.
c. Topologically analyse the volumes of the general structure of the roller coaster or a possible course of the rails in the route of the roller coaster, giving volume to the individual components, establishing their real dimensions, the chosen three-dimensional additive moulding technology, the maximum loads and of operation, identifying those areas of the volume necessary to reach the target, intended as maximum stress for the passenger, and removing all the others, according to a binary threshold parameter;
d. Pre-process the curves and the three-dimensional kinematics of the rail or kinematics that support the hitch (s) of the cars/nacelles to determine the stresses and tensions in the various points of the track or of the simulation of the circuit to which the car is subjected gondola itself;
e. Carry out the finite element elastic analysis of the product, by means of a digital mesh representation of the geometric model supporting the structural elements of the roller coaster and recalculate all the forces, moments, stresses and constraint reactions found in step b;
f. Optimize the structure of the product, eliminating the parts of the mesh, whose density value is lower than a predetermined threshold, to be cleaned, removing bevels and irregularities, to reduce unpleasant vibrations for the passenger.
g. Analyse, by stratigraphic simulation, the structure of the resulting artefact after the implementation of the 3D printing process, to verify the residual stresses and the criteria of resistance to breaking of the artefacts and the safety in the coupling of materials, possibly but not necessarily heterogeneous.

2. Method according to claim 1, with multi-parametric optimization of the manufacturing variables; including changes to the three-dimensional layout of said closed circuit, to respect the mechanical stress limits of the components

3. Method according to claim 1, wherein the step of preparing the boundary edges includes: generating piecewise geometrically smooth curves between the boundary points convert such curves to cubic interpolation polynomials and defining evenly spaced points on each cubic interpolation polynomial.

4. Method according to claim 1, to set the topological optimization, in the design space, classifying the mesh, loads and constraints, into two distinct groups, active areas, those that will contribute to the optimization itself and passive area those that will not be considered by the multi-parametric optimizer.

5. Method according to claim 1, where the physical constraints of the 3D printing production system are stored as boundary conditions, against which the design process checks the ongoing outputs

6. Methods according to claim 1, where said optimization is achieved through a cyclic process of mass subtraction in the said active areas

7. Manufacturing process of the final product, through 3D printing technique using the geometric data (mesh), as per claim 2, comprising the following steps:
a. Using a high-precision laser, directed at the metal powder particles, to sequentially build thin horizontal metal layers.
b. Selection of the metal for the synthesis of the next layer, taking into account the coupling of heterogeneous materials
c. Melting of a layer of powder particles of said metal so that the new material sticks to the previous layer, without the need for a binder.

8. Manufacturing process, according to claim 6, where the metal additive layer is obtained by sintering, polymerization, or melting of liquid, powder or granular raw material, implementing step c) of the preceding claim.

9. Manufacturing process, according to claim 3, wherein ultraviolet light, high-power laser, preferably but not necessarily double, or concentrated electron beam are used for the sintering, polymerization and melting operations, respectively.

10. Manufacturing process, according to claim 3, including a series of final tests, according to a protocol of controls determined also based on the severity of the use of the element itself, to ensure the standards referred to in claim 1.
